# EUROPÄISCHE PATENTSCHRIFT

(11) **EP 2 527 866 B1**
(45) Veröffentlichungstag und Bekanntmachung des Hinweises auf die Patenterteilung: **28.09.2016**
(21) Anmeldenummer: 12164434.8
(22) Anmeldetag: 17.04.2012
(51) Int. Cl.: G01S 7/481, G01S 7/497, G01S 17/08

(54) **Messeinrichtung zur Distanzmessung**
Measuring device for distance measuring
Dispositif de mesure de la distance

(30) Priorität: 26.05.2011 DE 102011076493
(43) Veröffentlichungstag der Anmeldung: 28.11.2012
(73) Patentinhaber: HILTI Aktiengesellschaft, 9494 Schaan (LI)
(72) Erfinder: Gogolla, Torsten, 9494 Schaan (LI); Tiefenthaler, Stefan, 6812 Meiningen (AT); Seifert, Helmut, 07616 Serba (DE); Schusser, Gero, 07745 Jena (DE)
(74) Vertreter: Hilti Aktiengesellschaft Corporate Intellectual Property

(56) Entgegenhaltungen:
- EP-A1- 1 752 788
- WO-A1-2004/036145
- DE-A1- 10 244 638

## Beschreibung

Die vorliegende Erfindung betrifft eine Messeinrichtung zur Messung einer Distanz zwischen einer Referenzmarke und einem Zielobjekt gemäß dem Oberbegriff des Anspruchs 1.

Messeinrichtungen für Laserdistanzmesssysteme bestehen aus einer als Strahlquelle ausgebildeten elektro-optischen Komponente, einer als Detektor ausgebildeten weiteren elektro-optischen Komponente, einer Sendeoptik und einer Empfangsoptik. Die Strahlquelle und die Sendeoptik werden als Sendeeinrichtung und der Detektor und die Empfangsoptik als Empfangseinrichtung bezeichnet. Die Strahlquelle sendet einen Laserstrahl entlang einer optischen Achse aus. Der Laserstrahl wird von der Sendeoptik gebündelt und auf das Zielobjekt gerichtet. Ein vom Zielobjekt reflektierter und/oder gestreuter Empfangsstrahl wird von der Empfangsoptik geformt und entlang einer optischen Achse auf den Detektor gerichtet. Messeinrichtungen werden in paraaxiale Anordnungen, bei denen die optischen Achsen der Sende- und Empfangseinrichtungen parallel versetzt verlaufen, und koaxiale Anordnungen, bei denen die optischen Achsen der Sende- und Empfangseinrichtungen übereinander liegen und mit Hilfe einer Strahlteilungsoptik getrennt werden, unterteilt. Bei koaxialen Anordnungen sind die Sendeoptik und die Empfangsoptik in eine gemeinsame Strahlformungsoptik, die den Laserstrahl und den Empfangsstrahl formt, integriert.

EP 1 351 070 A1 offenbart eine bekannte Messeinrichtung mit einer paraaxialen Anordnung der Sende- und Empfangseinrichtungen. Die Strahlquelle, die Sendeoptik und die Empfangsoptik sind an einem in sich starren Optikträger befestigt. Der Detektor ist an einer Leiterplatte befestigt, die über eine Schraubverbindung mechanisch starr mit dem Optikträger verbunden ist. Die Strahlquelle und die Empfangsoptik werden auf Anschlag in die Aufnahmen im Optikträger eingesetzt und ggf. mit einer Klebverbindung im Optikträger fixiert. Die Sendeoptik ist im Optikträger entlang ihrer optischen Achse verstellbar und wird bei aktivierter Strahlquelle justiert, sie wird in der justierten Position mit dem Optikträger verklebt. Der Detektor wird bei aktivierter Strahlquelle mit einem Manipulator relativ zur Leiterplatte in allen drei Raumrichtungen, d.h. in Richtung seiner optischen Achse und in der Ebene senkrecht zur optischen Achse, verschoben, bis der Empfangsstrahl auf einen vorbestimmten Bereich des Detektors auftrifft. Anschließend wird der Detektor in der justierten Position auf der Leiterplatte mit einer Lötverbindung fixiert. Justagetoleranzen werden durch Justagespalte mit Lötbrücken und vergrößerten Kontaktflächen ausgeglichen.

Lötbrücken zwischen der Leiterplatte und einer elektro-optischen Komponente haben den Nachteil, dass die Zuverlässigkeit der mechanischen Befestigung der elektro-optischen Komponente auf der Leiterplatte gegenüber einer Lötverbindung ohne Spalt reduziert ist. Außerdem können in der Lötverbindung kalte Lötstellen entstehen. Bei einer kalten Lötstelle besteht zwischen dem Lot und den Verbindungspartnern keine stoffschlüssige Verbindung. Die mechanischen und elektrischen Eigenschaften einer kalten Lötstelle sind mangelhaft. Kalte Lötstellen verursachen häufig aber nicht sofort eine elektrische Unterbrechung. Da kalte Lötstellen nur geringen mechanischen Belastungen stand halten, können bereits geringe Vibrationen und Erschütterungen der Lötstelle oder eine Dehnung der Lötverbindung bei sich erwärmenden Bauteilen zu einer elektrischen Unterbrechung führen. Neben den fertigungstechnischen Problemen beim Löten wirken sich Lötbrücken nachteilig auf die Hochfrequenz-Eigenschaften der Messeinrichtungen aus. Eine Lötbrücke bildet eine Induktivität, die die Signalintegrität und die elektromagnetische Verträglichkeit (EMV) der Messeinrichtung verschlechtert.

DE 102 44 638 A1 offenbart eine Messeinrichtung mit einer Strahlquelle, die einen Laserstrahl aussendet, einem Detektor, der einen reflektierten und/oder gestreuten Empfangsstrahl empfängt, einem Strahlformungssystem, das eine Sendeoptik zur Strahlformung des Laserstrahls und eine Empfangsoptik zur Strahlformung des Empfangsstrahls aufweist, und einem Optikträger sowie mit einer Leiterplatte und einer Verbindungseinrichtung, die den Optikträger mit der Leiterplatte verbindet. Der Optikträger weist eine erste Aufnahme zur Befestigung der Strahlquelle, eine zweite Aufnahme zur Befestigung der Sendeoptik und eine dritte Aufnahme zur Befestigung der Empfangsoptik auf; die Leiterplatte weist eine weitere Aufnahme zur Befestigung des Detektors auf. Nachteilig ist, dass der der Optikträger mehrteilig ausgebildet ist.

Aus EP 1 752 788 A1 ist eine Messeinrichtung zur Distanzmessung bekannt. Die Messeinrichtung umfasst eine Strahlquelle, die einen Laserstrahl aussendet, einen Detektor, der einen reflektierten und/oder gestreuten Empfangsstrahl empfängt, ein Strahlformungssystem, das eine Sendeoptik zur Strahlformung des Laserstrahls und eine Empfangsoptik zur Strahlformung des Empfangsstrahls aufweist, und einen monolithischen Optikträger sowie eine Leiterplatte und eine Verbindungseinrichtung, die den Optikträger mit der Leiterplatte verbindet. Der monolithische Optikträger weist eine erste Aufnahme zur Befestigung der Strahlquelle, eine zweite Aufnahme zur Befestigung der Sendeoptik und eine dritte Aufnahme zur Befestigung der Empfangsoptik auf, wobei die Strahlquelle, die Sendeoptik und die Empfangsoptik fest mit dem Optikträger verbunden und während der Justierung der Messeinrichtung zum Optikträger nicht einstellbar ausgebildet sind. Die Leiterplatte weist eine weitere Aufnahme zur Befestigung des Detektors auf, wobei der Detektor während der Justierung der Messeinrichtung in der Ebene senkrecht zur optischen Achse des Empfangsstrahls verstellbar ist. Nachteilig ist, dass die im Optikträger angeordneten optischen und elektro-optischen Komponenten während der Justierung der Messeinrichtung nicht einstellbar sind.

Wünschenswert wäre es, eine Messeinrichtung hinsichtlich der oben erläuterten Nachteile zu verbessern. Die Aufgabe der vorliegenden Erfindung besteht darin, eine kompakte Messeinrichtung für ein Laserdistanzmesssystem mit geringen Justagetoleranzen und einer hohen Justagehaltigkeit der eingebauten Komponenten bereitzustellen.

Diese Aufgabe wird bei der eingangs genannten Messeinrichtung erfindungsgemäß durch die Merkmale des unabhängigen Anspruchs 1 gelöst. Vorteilhafte Weiterbildungen der Erfindung sind in den abhängigen Ansprüchen angegeben.

Erfindungsgemäß ist vorgesehen, dass während der Justierung der Messeinrichtung die im Optikträger angeordnete erste der elektro-optischen Komponenten und die mindestens eine Strahlformungsoptik ausschließlich in Richtung der zugeordneten optischen Achsen relativ zum Optikträger einstellbar sind.

Eine elektro-optische Komponente ist eine optische Komponente, die zum Betrieb mit elektrischem Strom versorgt werden muss und die elektrische Ströme in Licht bzw. Licht in elektrische Ströme umwandelt, wie beispielsweise eine Strahlquelle oder ein Detektor. Als zugeordnete optische Achse einer optischen oder elektro-optischen Komponente wird die optische Achse eines Laser- oder Empfangsstrahls bezeichnet, der der jeweiligen optischen oder elektro-optischen Komponente zugeordnet ist. Beispielsweise ist die zugeordnete optische Achse einer Strahlquelle die optische Achse des von der Strahlquelle ausgesandten Laserstrahls und die zugeordnete optische Achse eines Detektors ist die optische Achse des auf den Detektor auftreffenden Empfangsstrahls.

Dadurch, dass sowohl die erste der elektro-optischen Komponenten als auch die mindestens eine Strahlformungsoptik während der Justierung der Messeinrichtung in Richtung der zugeordneten optischen Achsen verstellbar sind, kann die Leiterplatte als Anschlagfläche für die auf der Leiterplatte angeordnete zweite der elektro-optischen Komponenten dienen. Die Justierung in Richtung der optischen Achsen erfolgt ausschließlich über die im Optikträger angeordneten optischen und elektro-optischen Komponenten. Die in der Ebene senkrecht zur optischen Achse notwendige Justierung der zweiten der elektro-optischen Komponenten erfolgt über eine Verstellung der zweiten der elektro-optischen Komponenten oder über eine Verstellung der Leiterplatte. Dadurch, dass die Leiterplatte während der Justierung der Messeinrichtung als Anschlagfläche für die zweite der elektro-optischen Komponenten dient, entsteht zwischen der Leiterplatte und der zweiten der elektro-optischen Komponenten kein Spalt, der durch eine Lötbrücke überbrückt werden muss.

Ein monolithischer Optikträger besteht aus einem Material und ist nicht aus mehreren Einzelteilen zusammengesetzt. Monolithische Optikträger weisen keine Verbindungszone zwischen einem ersten und zweiten Verbindungspartner auf. Ein monolithischer Optikträger weist gegenüber einem mehrteiligen Optikträger den Vorteil auf, dass sich der Optikträger unter Temperatureinfluss gleichmäßig verändert, es gibt keine Bereiche im Optikträger, die sich aufgrund verschiedener Materialeigenschaften temperaturabhängig unterschiedlich verändern. Monolithische Optikträger besitzen eine hohe Stabilität, wodurch geringe Justagetoleranzen und eine hohe Justagehaltigkeit der eingebauten Komponenten gewährleistet sind.

Die Ebene, in der die zweite der elektro-optischen Komponenten einstellbar ist, verläuft im Wesentlichen senkrecht zur zugeordneten optischen Achse. Eine geringe Abweichung vom rechten Winkel ist tolerierbar, solange die resultierende Abstandsänderung zur Strahlformungsoptik einen zulässigen Wert nicht überschreitet. Bei einem Justageweg von 500 µm in der Ebene senkrecht zum Empfangsstrahl (Detektor als zweite der elektro-optischen Komponenten) und einer Winkelabweichung von 1° ergibt sich beispielsweise eine Abstandsänderung zur Strahlformungsoptik von ca. 10 µm. Diese Abstandsänderung führt zu einer Verschiebung der Fokuslage, die während der Justierung der Messeinrichtung unerwünscht ist. Die Winkelabweichung darf lediglich in der Größenordnung liegen, dass die resultierende Verschiebung der Fokuslage während der Justierung der Messeinrichtung noch zulässig ist. Die im Optikträger angeordneten optischen und elektro-optischen Komponenten sind in Richtung der jeweils zugeordneten optischen Achsen einstellbar, d.h. die Verstellrichtungen der Komponenten verlaufen im Wesentlichen parallel zu den optischen Achsen. Abweichungen von der Parallelität, die beispielsweise durch Fertigungstoleranzen des Optikträgers entstehen, sind zulässig.

In einer bevorzugten Ausführungsform ist vorgesehen, dass die Leiterplatte während der Justierung der Messeinrichtung in der Ebene senkrecht zur zugeordneten optischen Achse der zweiten der elektro-optischen Komponenten relativ zum Optikträger verstellbar ist und die erste Kontaktfläche des Optikträgers für die Leiterplatte als Anschlagfläche in Richtung der zugeordneten optischen Achse der zweiten der elektro-optischen Komponenten wirkt. Besonders bevorzugt ist die auf der Leiterplatte angeordnete zweite der elektro-optischen Komponenten relativ zur Leiterplatte nicht verstellbar ausgebildet. Diese Ausführung hat den Vorteil, dass die auf der Leiterplatte angeordnete elektro-optische Komponente bereits vor der Justierung bei der Bestückung der Leiterplatte durch eine Lötverbindung stoffschlüssig mit der Leiterplatte verbunden werden kann. Auf diese Weise wird zwischen der Leiterplatte und der elektro-optischen Komponente ein Spalt vermieden, der durch eine Lötbrücke überbrückt werden muss. Dass die Bildung einer Lötbrücke vermieden wird, erhöht die Zuverlässigkeit der mechanischen Befestigung der elektro-optischen Komponenten und verbessert die Hochfrequenz-Eigenschaften.

Besonders bevorzugt ist die zweite der elektro-optischen Komponenten auf einer dem Optikträger zugewandten Vorderseite der Leiterplatte angeordnet. Wenn die Justierung der zweiten der elektro-optischen Komponenten über die Leiterplatte erfolgt, ist ein direkter Zugang zur elektro-optischen Komponente nicht erforderlich und die zweite der elektro-optischen Komponenten kann durch die Anordnung auf der Vorderseite vor einer direkten Krafteinwirkung geschützt werden.

In einer alternativen bevorzugten Ausführungsform ist vorgesehen, dass die zweite der elektro-optischen Komponenten während der Justierung der Messeinrichtung relativ zur Leiterplatte in der Ebene senkrecht zur zugeordneten optischen Achse der zweiten der elektrooptischen Komponenten verstellbar ist und die Leiterplatte für die zweite der elektrooptischen Komponenten als Anschlagfläche in Richtung der zugeordneten optischen Achse der zweiten der elektro-optischen Komponenten wirkt. Die Rückseite der Leiterplatte legt die Position der zweiten der elektro-optischen Komponenten in Richtung der zugeordneten optischen Achse fest und die elektro-optische Komponente wird beim Löten gegen die Leiterplatte gedrückt, so dass eine Lötbrücke vermieden wird.

Bevorzugt ist die zweite der elektro-optischen Komponenten auf einer dem Optikträger abgewandten Rückseite der Leiterplatte angeordnet. Durch die Anordnung auf der Rückseite der Leiterplatte ist die zweite der elektro-optischen Komponenten für einen Manipulator zur Positionierung der zweiten der elektro-optischen Komponenten und zum Erstellen einer Lötverbindung zugänglich. Die Anordnung auf der Rückseite hat außerdem den Vorteil, dass die Leiterplatte, die aus einem isolierenden Material besteht, zwischen der ersten und zweiten der elektro-optischen Komponenten als Abschirmung wirkt, so dass optisches und elektrisches Übersprechen zwischen den elektro-optischen Komponenten reduziert wird.

Besonders bevorzugt ist der Optikträger aus einem metallischen Material, beispielsweise Zink, ausgebildet. Metallische Optikträger führen zu einer elektrischen Abschirmung zwischen den elektro-optischen Komponenten und reduzieren elektrisches Übersprechen zwischen einer Strahlquelle und einem Detektor. Zink lässt sich in Druckgussverfahren mit einer hohen Genauigkeit verarbeiten und besitzt außerdem eine hohe Temperaturstabilität, so dass Temperaturschwankungen, denen Laserdistanzmesssysteme häufig ausgesetzt sind, nur einen geringen Einfluss auf den Justagezustand der eingebauten Komponenten und die Messeigenschaften der Messeinrichtung ausüben.

Bevorzugt ist die Verbindungseinrichtung, die die erste Kontaktfläche des Optikträgers mit der zweiten Kontaktfläche der Leiterplatte verbindet, als Schraubverbindung ausgebildet. Durch die Schraubverbindung wird eine leitfähige Verbindung zwischen dem Optikträger und der Leiterplatte hergestellt. Dies ist notwendig, um eine gute Signalintegrität, gute EMV-Eigenschaften und eine gute Abschirmwirkung der eingebauten Komponenten zu gewährleisten.

Alternativ ist die Verbindungseinrichtung, die die erste Kontaktfläche des Optikträgers mit der zweiten Kontaktfläche der Leiterplatte verbindet, als Kleb- und Schraubverbindung ausgebildet. Bei einer Kleb- und Schraubverbindung werden die Vorteile der beiden Verbindungstechniken kombiniert. Beim Kleben wird die Kraft flächig vom einen zum anderen Verbindungspartner übertragen. Die Klebverbindung kann sich allerdings unter Temperatureinwirkung verändern. Bei tiefen Temperaturen kann es zu einer Versprödung und bei hohen Temperaturen zu einer Erweichung der Klebverbindung kommen. Bei einer Schraubverbindung entstehen Spannungsspitzen an den Verbindungspartnern, während der Raum dazwischen kaum zur Kraftübertragung beiträgt. Vorteilhaft ist, dass Schraubverbindungen nur einem geringen Temperatureinfluss unterliegen.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:

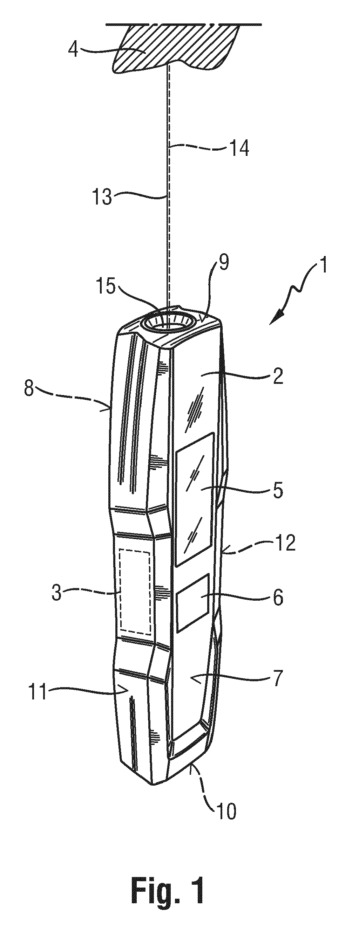

- Fig. 1: ein Laserdistanzmesssystem mit einer Messeinrichtung;

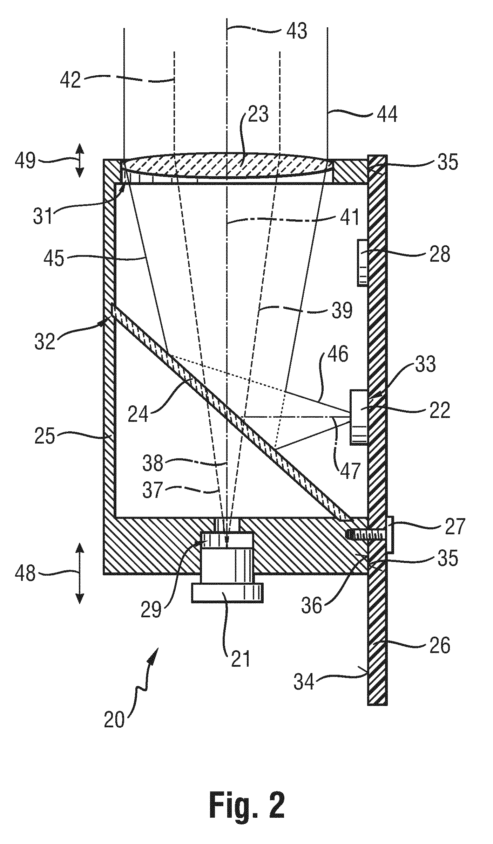

- Fig. 2: eine erste Ausführungsform einer koaxialen Messeinrichtung mit einer Strahlquelle, die in einen Optikträger eingesetzt ist, einem Detektor, der auf einer dem Optikträger zugewandten Vorderseite einer Leiterplatte angeordnet und während der Justierung der Messeinrichtung stoffschlüssig mit der Leiterplatte verbunden ist, und einer Strahlteilungsoptik, die als Polarisationsstrahlteiler ausgebildet und in einer Aufnahme des Optikträgers befestigt ist;

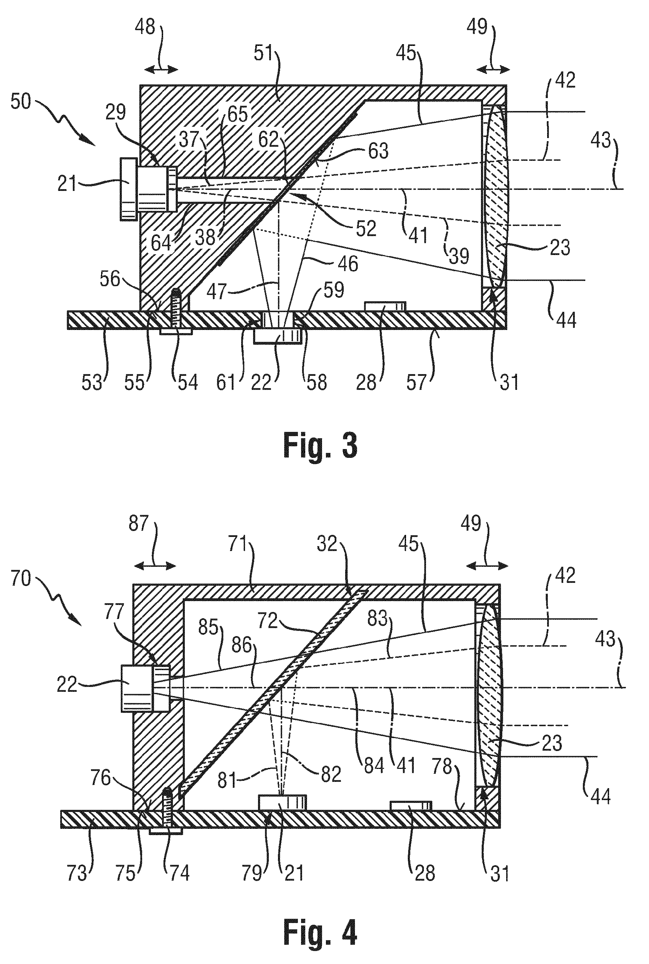

- Fig. 3: eine zweite Ausführungsform einer koaxialen Messeinrichtung mit einer Strahlquelle, die in einen Optikträger eingesetzt ist, einem Detektor, der auf einer dem Optikträger abgewandten Rückseite der Leiterplatte angeordnet und während der Justierung der Messeinrichtung zur Leiterplatte verstellbar ist, und einer Strahlteilungsoptik, die als Lochspiegel ausgebildet und in den Optikträger integriert ist;
- Fig. 4: eine dritte Ausführungsform einer koaxialen Messeinrichtung mit einem Detektor, der in einen Optikträger eingesetzt ist, einer Strahlquelle, die auf der dem Optikträger zugewandten Vorderseite einer Leiterplatte angeordnet und während der Justierung der Messeinrichtung fest mit der Leiterplatte verbunden ist, und einer Strahlteilungsoptik, die als Polarisationsstrahlteiler ausgebildet und in einer Aufnahme des Optikträgers befestigt ist; und

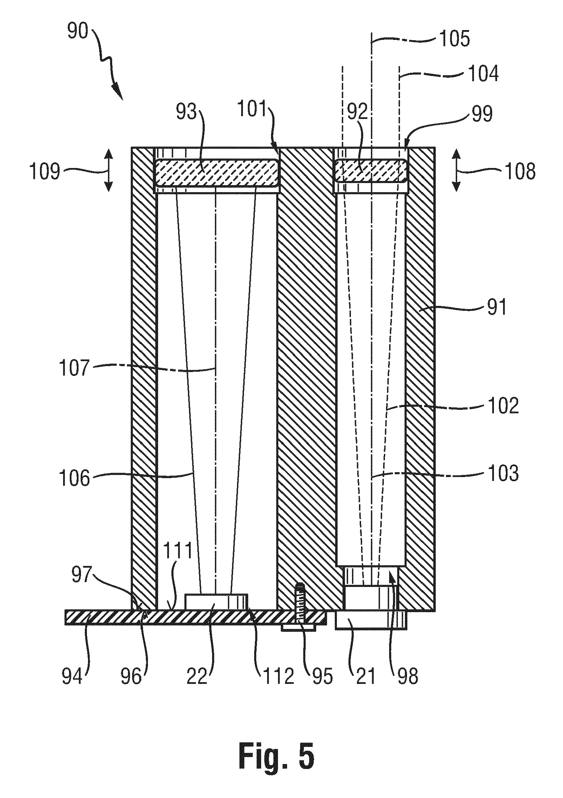

- Fig. 5: eine erste Ausführungsform einer paraaxialen Messeinrichtung mit einer Strahlquelle, einer Sendeoptik und einer Empfangsoptik, die in einen Optikträger eingesetzt sind, und einem Detektor, der auf einer dem Optikträger zugewandten Vorderseite einer Leiterplatte angeordnet und während der Justierung der Messeinrichtung fest mit der Leiterplatte verbunden ist.

**Fig. 1** zeigt ein Laserdistanzmesssystem **1** in einer dreidimensionalen Darstellung. Das Laserdistanzmesssystem 1 umfasst ein Gehäuse **2,** eine Messeinrichtung **3,** mit der die Distanz zu einem Zielobjekt **4** messbar ist, eine Anzeigeeinrichtung **5** zur Anzeige der gemessenen Distanz und eine Bedieneinrichtung **6** zum Starten einer Distanzmessung und zum Einstellen des Laserdistanzmesssystems 1.

Die Messeinrichtung 3 ist im Inneren des Gehäuses 2 angeordnet und die Anzeige- und Bedieneinrichtungen 5, 6 sind in eine Oberseite **7** des Gehäuses 2 eingebettet. Die Oberseite 7 und die der Oberseite 7 gegenüberliegende Unterseite **8** des Gehäuses 2 bilden die größten Gehäuseflächen des Laserdistanzmesssystems 1. Die an die Oberseite 7 angrenzenden Vorder- und Hinterseiten **9, 10** sowie die Seitenflächen **11, 12** des Gehäuses 2 sind möglichst klein ausgebildet, um ein kompaktes Laserdistanzmesssystem 1 aufzubauen.

Die Messeinrichtung 3 sendet einen Laserstrahl **13** aus, der auf das Zielobjekt 4 gerichtet ist. Ein vom Zielobjekt 4 reflektierter und/oder gestreuter Empfangsstrahl **14** wird von der Messeinrichtung 3 detektiert. Der Austritt des Laserstrahls 13 aus dem Gehäuse 2 erfolgt über eine Auskoppelöffnung **15,** die in die Vorderseite 9 des Gehäuses 2 eingebettet ist. Die optische Achse des Laserstrahls 13 ist annähernd senkrecht zur Vorderseite 9 ausgerichtet. Der vom Zielobjekt 4 kommende Empfangsstrahl 14 tritt über die Auskoppelöffnung 15 in das Laserdistanzmesssystem 1 ein.

Die Distanzmessung zum Zielobjekt 4 erfolgt in Bezug auf eine am Laserdistanzmesssystem befindliche Referenzmarke. Bei dem Laserdistanzmesssystem 1 werden die Vorderseite 9 oder die Hinterseite 10 als Referenzmarken verwendet. Die Umschaltung zwischen den Referenzmarken erfolgt über eine Umschalteinrichtung.

**Fig. 2** zeigt schematisch eine erste Ausführungsform einer Messeinrichtung **20** mit einem koaxialen Aufbau. Die Messeinrichtung 20 umfasst eine als Strahlquelle **21** ausgebildete elektro-optische Komponente, eine als Detektor **22** ausgebildete weitere elektro-optische Komponante, eine Strahlformungsoptik **23**, eine Strahlteilungsoptik **24,** einen Optikträger **25** und eine Leiterplatte **26.** Der Optikträger 25 ist über eine Verbindungseinrichtung **27** mit der Leiterplatte 26 verbunden.

Die Strahlquelle 21 ist als Laserdiode ausgebildet, die einen Laserstrahl im sichtbaren Spektrum, beispielsweise einen roten Laserstrahl mit einer Wellenlänge von 635 nm oder einen grünen Laserstrahl mit einer Wellenlänge von 532 nm, erzeugt. Der Detektor 22 ist als Fotodiode ausgebildet, deren Eigenschaften an die Laserdiode 21 angepasst sind. Eine Steuer- und Auswerteeinrichtung **28** ist mit der Strahlquelle 21 und dem Detektor 22 verbunden und bestimmt aus einer Zeitdifferenz zwischen einem Referenzstrahl und dem vom Detektor 22 erfassten Empfangsstrahl 14 die Distanz zum Zielobjekt 4.

Die Strahlformungsoptik 23 ist als Linse ausgebildet, die sowohl den ausgesandten Laserstrahl 13 als auch den Empfangsstrahl 14 formt. Mit Hilfe der Strahlteilungsoptik 24 wird der Laserstrahl vom koaxial verlaufenden Empfangsstrahl getrennt. Die Strahlteilungsoptik 24 ist im Strahlengang des ausgesandten Laserstrahls zwischen der Strahlquelle 21 und der Strahlformungsoptik 23 und im Strahlengang des reflektierten und/oder gestreuten Empfangsstrahls zwischen der Strahlformungsoptik 23 und dem Detektor 22 angeordnet. Die Strahlteilungsoptik 24 ist als Polarisationsstrahlteiler ausgebildet, der für Licht mit der Polarisationsrichtung des ausgesandten Laserstrahls überwiegend transmittierend (Transmissionsgrad größer als ca. 80 %) und für unpolarisiertes Licht teil-reflektierend (Reflexionsgrad ca. 50 %) ausgebildet ist. Am Zielobjekt 4 reflektierte Strahlung, d.h. der reflektierte Anteil des Empfangsstrahls, weist eine hohe Intensität auf und besitzt die gleiche Polarisationsrichtung wie der ausgesandte Laserstrahl, wohingegen am Zielobjekt 4 gestreute Strahlung, d.h. der gestreute Anteil des Empfangsstrahls, unpolarisiert ist. Mit Hilfe der Strahlteilungsoptik 24 wird der am Zielobjekt 4 reflektierte und damit polarisierte Anteil des Empfangsstrahls stark gedämpft, um ein Übersteuern des Detektors 22 zu verhindern.

Eine Leiterplatte ist ein Träger für elektronische und elektro-optische Bauelemente und dient der mechanischen Befestigung und elektrischen Verbindung. Leiterplatten bestehen aus elektrisch isolierendem Material, zum Beispiel faserverstärktem Kunststoff, Teflon oder Keramik, mit verbundenen Leiterbahnen. Die Bauelemente werden auf Lötflächen oder in Lötaugen gelötet und auf diese Weise gleichzeitig mechanisch gehalten und elektrisch verbunden. Größere Bauelemente können mit Kleb- oder Schraubverbindungen auf der Leiterplatte befestigt werden.

Die Strahlquelle 21, die Strahlformungsoptik 23 und die Strahlteilungsoptik 24 sind am Optikträger 25 angeordnet. Der Optikträger 25 weist eine erste Aufnahme **29** für die als Strahlquelle 21 ausgebildete erste elektro-optische Komponente, eine zweite Aufnahme **31** für die Strahlformungsoptik 23 und eine dritte Aufnahme **32** für die Strahlteilungsoptik 24 auf. Die als Detektor 22 ausgebildete zweite elektro-optische Komponente ist auf der Leiterplatte 26 in einer weiteren Aufnahme **33** angeordnet, wobei die Leiterplatte 26 für die zweite elektro-optische Komponente als weiterer Optikträger wirkt.

Der Optikträger 25 ist als monolithischer Optikträger ausgebildet, der nicht aus mehreren Einzelteilen zusammengesetzt ist, sondern aus einem Material besteht. Monolithische Optikträger weisen keine Verbindungszone zwischen einem ersten und zweiten Verbindungspartner auf. Der Optikträger 25 besteht aus einem metallischen Material, beispielsweise Zink. Metallische Optikträger führen zu einer elektrischen Abschirmung zwischen den elektro-optischen Komponenten und reduzieren elektrisches Übersprechen zwischen der Strahlquelle und dem Detektor. Zink besitzt eine hohe Temperaturstabilität, so dass Temperaturschwankungen, denen Laserdistanzmesssysteme häufig ausgesetzt sind, nur einen geringen Einfluss auf den Justagezustand der eingebauten Komponenten und die Messeigenschaften der Messeinrichtung ausüben. Außerdem lässt sich Zink in Druckgussverfahren mit einer hohen Genauigkeit verarbeiten, so dass die Aufnahmen 31, 32, 33 sehr genau hergestellt und zueinander positioniert sind.

Der Detektor 22 ist auf einer dem Optikträger 25 zugewandten Vorderseite **34** der Leiterplatte 26 angeordnet und mit der Leiterplatte 26 fest über eine Lötverbindung verbunden, der Detektor 22 kann beispielsweise bei der Herstellung der Leiterplatte 26 automatisch bestückt und verlötet werden. Der Detektor 22 ist ausschließlich mit der Leiterplatte 26 verbunden und mechanisch gehalten, es sind keine Verbindungsmittel vorhanden, die den Detektor 22 unmittelbar mit dem Optikträger 25 verbinden. Der Optikträger 25 ist an der dem Detektor 22 im verbauten Zustand zugewandten Seite zumindest im Bereich des Detektors 22 offen ausgebildet und mit einer ersten Kontaktfläche **35** über die Verbindungseinrichtung 27 mit einer zweiten Kontaktfläche **36,** die an der Vorderseite 34 der Leiterplatte 26 angeordnet ist, verbunden. Die Verbindungseinrichtung 27 ist zumindest während der Justierung der Messeinrichtung 20 und der Justierung des Detektors 22 lösbar ausgebildet.

Die Strahlquelle 21 sendet einen divergenten primären Laserstrahl **37** entlang einer optischen Achse **38** aus. Der primäre Laserstrahl trifft auf den Polarisationsstrahlteiler 24, an dem der größtmögliche Teil transmittiert wird und als divergenter sekundärer Laserstrahl 39 in Richtung einer optischen Achse **41** auf die Strahlformungsoptik 23 auftrifft. Die Strahlformungsoptik 23 bündelt den Laserstrahl und richtet einen tertiären Laserstrahl **42** mit geringer Divergenz in Richtung einer optischen Achse **43** auf das Zielobjekt 4.

Der vom Zielobjekt 4 reflektierte und/oder gestreute Empfangsstrahl, der im Folgenden als primärer Empfangsstrahl **44** bezeichnet wird, trifft auf die Strahlformungsoptik 23, die den primären Empfangsstrahl 44 fokussiert und als sekundären Empfangsstrahl **45** auf die Strahlteilungsoptik 24 richtet. Die optische Achse des sekundären Empfangsstrahls 45 verläuft koaxial zur optischen Achse 41 des sekundären Laserstrahls 39. Der sekundäre Empfangsstrahl 45 wird von der Strahlteilungsoptik 24 zumindest teilweise reflektiert und der reflektierte Anteil als tertiärer Empfangsstrahl **46** entlang einer optischen Achse **47** auf den Detektor 22 gerichtet. Die Strahlteilungsoptik 24 sorgt dafür, dass die optische Achse 47 des tertiären Empfangsstrahls 46 und die optische Achse 38 des primären Laserstrahls 37 voneinander verschieden sind. Der in Fig. 2 gezeigte primäre Empfangsstrahl 44 entspricht nicht der tatsächlichen Lichtverteilung im Außenbereich, sondern vielmehr dem effektiven Öffnungswinkel des Empfangssystems bestehend aus der Strahlformungsoptik 23 und der aktiven Fläche des Detektors 22.

Die Strahlquelle 21 und die Strahlformungsoptik 23 sind in ihren Aufnahmen 29, 31 zumindest während der Justierung der Messeinrichtung 20 jeweils in einer Hin- und/oder Rückrichtung **48, 49,** die parallel zur zugehörigen optischen Achse 38, 43 verläuft, verstellbar ausgebildet, wobei die Hin- und/oder Rückrichtungen 48, 49 auch als Verstellrichtungen bezeichnet werden. Die Strahlquelle 21 und die Strahlformungsoptik 23 sind während der Justierung der Messeinrichtung 20 ausschließlich in der jeweiligen Verstellrichtung 48, 49 verstellbar, eine Verstellbarkeit in Richtung einer Ebene senkrecht zur optischen Achse 38, 43 ist nicht vorgesehen.

Die Justierung der Messeinrichtung 20 erfolgt mit Hilfe eines optischen Instrumentes, das eine Linse und einen digitalen Kamerachip, der in der Fokusebene der Linse angeordnet ist, umfasst. Das optische Instrument ist auf eine gewünschte Gegenstandsweite eingestellt, wobei die Gegenstandsweite als eine endliche Entfernung, beispielsweise 10 m, oder eine unendliche Entfernung eingestellt sein kann. Die Messeinrichtung 20 wird so vor der Linse angeordnet, dass die Linse den tertiären Laserstrahl 42 und eine Abbildung der aktiven Fläche des Detektors 22 erfasst und auf dem Kamerachip abbildet. Auf dem Kamerachip sind sowohl der Laserstahl als auch die Abbildung der aktiven Fläche des Detektors 22 gleichzeitig dargestellt.

Die Justierung der Messeinrichtung 20 erfolgt in zwei Abschnitten: In einem ersten Abschnitt werden die optischen Komponenten 21, 23, im Optikträger 25 in ihrer jeweiligen Verstellrichtung 48, 49 justiert und nach der Justierung des Optikträgers 25 wird der Detektor 22 in einem zweiten Abschnitt in einer Ebene senkrecht zur zugeordneten optischen Achse 47 justiert. Die erste und zweite Aufnahme 29, 31 im Optikträger 25 sind so ausgebildet, dass die elektro-optische Komponente und die Strahlformungsoptik 23 nur in ihrer Verstellrichtung 48, 49 verstellbar sind, eine Verstellung in einer Ebene senkrecht zu den optischen Achsen ist nicht möglich.

Im ersten Abschnitt wird zunächst die Strahlteilungsoptik 24 in die dritte Aufnahme 32 eingesetzt und am Optikträger 25 fixiert. Die Verbindung kann lösbar oder unlösbar ausgebildet sein. Anschließend werden die Strahlquelle 21 und die Strahlformungsoptik 23 in ihre Aufnahmen 29, 31 eingesetzt. Um die Strahlformungsoptik 23 und die Strahlquelle 21 zu justieren, wird die Leiterplatte 26 mit dem Detektor 22 auf Anschlag mit dem Optikträger 25 gebracht und mittels der Verbindungseinrichtung 27 lösbar mit dem Optikträger 25 verbunden.

Die Strahlformungsoptik 23 wird in ihrer Verstellrichtung 49 verschoben, bis das optische Instrument, das auf die gewünschte Gegenstandsweite eingestellt ist, durch die Strahlformungsoptik 23 ein scharfes Bild der aktiven Fläche des Detektors 22 detektiert, wobei das Bild bei einem hohen Kontrast scharf ist. Im Fall maximaler Bildschärfe ist die Strahlformungsoptik 23 im Bezug zur aktiven Fläche des Detektors 22 auf die gewünschte Entfernung, die der Gegenstandsweite des optischen Instrumentes entspricht, justiert. Die zweite Aufnahme 31 für die Strahlformungsoptik 23 ist beispielsweise als Presspassung ausgebildet und die Strahlformungsoptik 23 ist durch die Klemmkraft der Presspassung 31 fixiert; die Verschiebung der Strahlformungsoptik 23 in der Verstellrichtung 49 erfolgt unter genügend hohem Druck gegen die Klemmkraft der Presspassung 31. Alternativ oder zusätzlich zur Presspassung kann die Strahlformungsoptik 23 stoffschlüssig, beispielsweise mittels einer Klebverbindung, mit dem Optikträger 25 verbunden werden.

Nach der Strahlformungsoptik 23 wird die Strahlquelle 21 justiert. Die Strahlquelle 21 sendet einen Laserstrahl aus, der mit Hilfe des optischen Instrumentes überwacht wird. Die Laserdiode 21 wird in der Richtung verschoben, bis das optische Instrument durch die Strahlformungsoptik 23 einen minimalen Fokuspunkt des Laserstrahls detektiert. In diesem Fall befindet sich die Strahltaille des Laserstrahls in der gewünschten Entfernung. Die erste Aufnahme 29 für die Strahlquelle 21 ist beispielsweise als Presspassung ausgebildet und die Strahlquelle 21 ist durch die Klemmkraft der Presspassung 29 fixiert; die Verschiebung der Strahlquelle 21 in der Verstellrichtung 48 erfolgt unter genügend hohem Druck gegen die Klemmkraft der Presspassung 29. Alternativ oder zusätzlich zur Presspassung kann die Strahlquelle 21 stoffschlüssig, beispielsweise mittels einer Klebverbindung, mit dem Optikträger 25 verbunden werden.

Nach der Justierung des Optikträgers 25 wird der Detektor 22 justiert. Da der Detektor 22 unlösbar über eine Lötverbindung mit der Leiterplatte 26 verbunden ist, erfolgt die Justierung des Detektors 22 relativ zum Optikträger 25 über die Leiterplatte 26. Dazu wird die Verbindungseinrichtung 28, die zumindest während der Justierung der Messeinrichtung 20 lösbar ausgebildet ist, zwischen dem Optikträger 25 und der Leiterplatte 26 gelöst. Die Strahlquelle 21 wird eingeschaltet und sendet einen Laserstrahl aus, der zusammen mit dem Bild der aktiven Detektorfläche vom optischen Instrument erfasst wird. Der Laserstrahl bildet auf dem Kamerachip einen Fokuspunkt und die aktive Detektorfläche bildet ein scharfes Bild, das dem Fokuspunkt des Laserstrahls überlagert ist. Die Leiterplatte 26 wird in der Ebene, die senkrecht zur optischen Achse 47 des tertiären Empfangsstrahls 46 ausgerichtet ist, auf Anschlag mit dem Optikträger 25 verschoben, bis sich der Fokuspunkt des Laserstrahls auf dem Kamerachip in einem bestimmten Bereich der aktiven Fläche des Detektors 22 befindet. Dabei entspricht die Position des Fokuspunktes des Laserstrahls der Position eines auf die Fotodiode 22 fokussierten Empfangsstrahls, der von einem in der Gegenstandsweite des optischen Instrumentes angeordneten Zielobjekt gestreut wurde.

Abschließend wird die justierte Leiterplatte 26 mit dem Optikträger 25 verbunden. Die dauerhafte Verbindung erfolgt in zwei Schritten. In einem ersten Schritt wird die Leiterplatte 26 kraftfrei über eine Klebverbindung mit dem Optikträger 25 verbunden. In einem zweiten Schritt wird die Leiterplatte 26 über eine Schraubverbindung mit dem Optikträger 25 verbunden. Alternativ kann die Leiterplatte unter genügendem Andruck erst verschraubt und anschließend mit Kleber zusätzlich gesichert werden.

Beim Kleben wird die Kraft flächig vom einen zum anderen Verbindungspartner übertragen. Eine Klebverbindung erfordert keine Veränderung der Verbindungspartner und kann in vielen Fällen ohne Beschädigung der Verbindungspartner rückgängig gemacht werden. Die Klebverbindung kann sich allerdings unter Temperatureinwirkung verändern. Bei tiefen Temperaturen kann es zu einer Versprödung und bei hohen Temperaturen zu einer Erweichung der Klebverbindung kommen. Bei einer Schraubverbindung entstehen Spannungsspitzen an den Verbindungspartnern, während der Raum dazwischen kaum zur Kraftübertragung beiträgt. Vorteilhaft ist, dass Schraubverbindungen nur einem geringen Temperatureinfluss unterliegen. Außerdem erzeugt eine Schraubverbindung eine elektrische Verbindung zwischen dem Optikträger und der Leiterplatte.

**Fig. 3** zeigt schematisch eine zweite Ausführungsform einer koaxialen Messeinrichtung **50,** die sich von der koaxialen Messeinrichtung 20 der Fig. 2 durch den Aufbau des Optikträgers, die Anordnung des Detektors und den Aufbau der Strahlteilungsoptik unterscheidet.

Die Messeinrichtung 50 umfasst einen monolithischen Optikträger **51,** in dem die Strahlquelle 21 als erste elektro-optische Komponente, die Strahlformungsoptik 23 und eine Strahlteilungsoptik **52** angeordnet sind, sowie eine Leiterplatte **53,** auf der der Detektor 22 als zweite elektro-optische Komponente angeordnet ist und die über eine Verbindungseinrichtung **54** mit dem Optikträger 51 verbunden ist. Die Leiterplatte 53 übernimmt für den Detektor 22 die Funktion eines Optikträgers. Die Verbindungseinrichtung 54 verbindet eine erste Kontaktfläche **55** des Optikträgers 51 mit einer entsprechenden zweiten Kontaktfläche **56** der Leiterplatte 53.

Der Optikträger 51 weist wie der Optikträger 25 der Messeinrichtung 20 die erste Aufnahme 29 für die Strahlquelle 21 und die zweite Aufnahme 31 für die Strahlformungsoptik 23 auf. Die Strahlquelle 21 und die Strahlformungsoptik 23 sind zumindest während der Justierung der Messeinrichtung 50 in ihren Aufnahmen 29, 31 in der jeweiligen Richtung 48, 49 verstellbar. Der Detektor 22 ist auf einer dem Optikträger 51 abgewandten Rückseite **57** der Leiterplatte 53 angeordnet und zumindest während der Justierung der Messeinrichtung 50 über eine Verbindungseinrichtung **58** lösbar mit der Leiterplatte 53 verbunden. Die Leiterplatte 53 ist mit einer Durchgangsbohrung **59** versehen, die als Blende für den tertiären Empfangsstrahl 44 wirkt. Die Leiterplatte 53 weist eine Aufnahme **61** für den Detektor 22 auf.

Die Strahlteilungsoptik 52 ist im Unterschied zum Polarisationsstrahlteiler 24 der Messeinrichtung 20 als Lochspiegel ausgebildet und in den Optikträger 51 integriert. Der Lochspiegel 52 ist im Strahlengang des Laserstrahls zwischen der Strahlquelle 21 und der Strahlformungsoptik 23 und im Strahlengang des Empfangsstrahls zwischen der Strahlformungsoptik 23 und dem Detektor 22 angeordnet. Der Lochspiegel 52 umfasst eine Öffnung **62,** durch die der Laserstrahl hindurch tritt. Die Öffnung 62 ist von einer Beschichtung **63** umgeben, die beispielsweise als metallische Beschichtung ausgebildet und für den Empfangsstrahl unabhängig von einer Polarisationsrichtung überwiegend reflektierend, beispielsweise mit einem Reflexionsgrad größer als ca. 95 %, ausgebildet ist. Am Zielobjekt 4 reflektierte Strahlung wird im Wesentlichen in sich zurückreflektiert, so dass der reflektierte Anteil des Empfangsstrahls im Bereich der Öffnung 62 auf die Strahlteilungsoptik 52 auftrifft und nicht zum Detektor 22 reflektiert wird. Durch den hohen Reflexionsgrad der Beschichtung 63 wird der gestreute Anteil des Empfangsstrahls größtenteils zum Detektor 22 reflektiert.

Im Strahlengang des primären Laserstrahls 37 ist zwischen der Strahlquelle 21 und dem Lochspiegel 52 eine Blende **64** angeordnet, die in den Optikträger 51 integriert ist. Die Blende 64 dient dazu, den Öffnungswinkel bzw. die numerische Apertur der Strahlquelle 21 zu begrenzen und die Geometrie des primären Laserstrahls 37 an die Strahlteilungsoptik 52 und die Strahlformungsoptik 23 anzupassen. Zwischen der Strahlquelle 21 und der Blende 64 ist eine Lichtfalle **65** angeordnet, die wie die Blende 64 in den Optikträger 51 integriert ist. Die Lichtfalle 65 dient dazu, auftreffendes Licht zu absorbieren und unerwünschte Reflektionen zu verhindern. Außerdem werden durch die Blende 64 und die Lichtfalle 65 optisches und elektrisches Übersprechen von der Strahlquelle 21 zum Detektor 22 reduziert.

In der Ausführung von Fig. 3 ist die Strahlteilungsoptik als Lochspiegel 52 ausgebildet. Das Vorsehen einer Blende und/oder einer Lichtfalle, um optisches und elektrisches Übersprechen von der Strahlquelle zum Detektor zu reduzieren, ist für jede Strahlteilungsoptik möglich, also auch für eine als Polarisationsstrahlteiler ausgebildete Strahlteilungsoptik oder eine sonstige, geeignete Strahlteilungsoptik.

Die Justierung des Optikträgers 51 erfolgt analog zur Messeinrichtung 20 der Fig. 2, wobei die Leiterplatte 53 auf Anschlag mit dem Optikträger 25 und der Detektor 22 mit der Rückseite der Leiterplatte 53 kontaktiert ist. Nach Justierung des Optikträgers 51 wird der Detektor 22 in der Ebene, die senkrecht zur optischen Achse 47 des tertiären Empfangsstrahls 46 ausgerichtet ist, justiert. Die Laserdiode 21 wird eingeschaltet und sendet einen Laserstrahl aus, der zusammen mit dem Bild der aktiven Fläche des Detektors 22 vom optischen Instrument erfasst wird. Der Laserstrahl bildet auf dem Kamerachip einen Fokuspunkt und die aktive Fläche des Detektors 22 bildet ein scharfes Bild, das dem Fokuspunkt überlagert ist. Der Detektor 22 ist auf der Rückseite 57 der Leiterplatte 53 für einen Manipulator zugänglich. Der Detektor 22 wird in der Ebene senkrecht zur optischen Achse 47 verschoben, bis sich der Fokuspunkt des Laserstrahls auf dem Kamerachip in einem bestimmten Bereich der aktiven Fläche des Detektors 22 befindet. Die Position des Fokuspunktes des Laserstrahls entspricht dabei der Position des von einem entfernten Zielobjekt (in Entfernung der Gegenstandsweite) gestreuten und auf den Detektor 22 fokussierten Empfangsstrahls. Anschließend wird der Detektor 22 in der justierten Position auf der Rückseite 57 der Leiterplatte 53 mit einer Lötverbindung auf der Leiterplatte 53 fixiert. Die justierte Position des Detektors 22 zeichnet sich dadurch aus, dass zwischen dem Detektor 22 und der Leiterplatte 53 kein Spalt in Richtung der optischen Achse 47 zu überbrücken ist. Der Detektor 22 ist so positioniert, dass die Rückseite 57 der Leiterplatte 53 als Anschlagfläche für den Detektor 22 dient.

**Fig. 4** zeigt schematisch eine dritte Ausführungsform einer koaxialen Messeinrichtung **70,** die sich durch die Anordnung der Strahlquelle 21 und des Detektors 22 von der koaxialen Messeinrichtung 20 unterscheidet. Im Unterschied zur Messeinrichtung 20 sind die Strahlquelle 21 auf der Leiterplatte und der Detektor 22 im monolithischen Optikträger angeordnet.

Die Messeinrichtung 70 umfasst einen monolithischen Optikträger **71,** in dem der Detektor 22 als erste elektro-optische Komponente, die Strahlformungsoptik 23 und eine Strahlteilungsoptik **72** angeordnet sind, sowie eine Leiterplatte **73,** auf der die Strahlquelle 21 als zweite elektro-optische Komponente angeordnet ist. Die Leiterplatte 73 ist über eine Verbindungseinrichtung **74** mit dem Optikträger 71 verbunden. Dabei verbindet die Verbindungseinrichtung 74 eine erste Kontaktfläche **75** des Optikträgers 71 mit einer entsprechend ausgebildeten zweiten Kontaktfläche **76** der Leiterplatte 73.

Der Optikträger 71 weist eine erste Aufnahme **77** für den Detektor 22, die zweite Aufnahme 31 für die Strahlformungsoptik 23 und die dritte Aufnahme 32 für die Strahlteilungsoptik 72 auf. Die Strahlquelle 21 ist auf einer dem Optikträger 71 zugewandten Vorderseite **78** der Leiterplatte 73 angeordnet und in einer Aufnahme **79** fest mit der Leiterplatte 73 verbunden. Die Leiterplatte 73 ist über die Verbindungseinrichtung 74 zumindest während der Justierung der Strahlquelle 21 lösbar mit dem Optikträger 71 verbunden.

Die Strahlquelle 21 sendet einen divergenten primären Laserstrahl **81** entlang einer optischen Achse **82** aus, der auf die Strahlteilungsoptik 72 gerichtet ist. Die Strahlteilungsoptik 72 ist als Polarisationsstrahlteiler ausgebildet, der für Licht mit der Polarisationsrichtung des ausgesandten Laserstrahls 81 überwiegend reflektierend (Reflexionsgrad größer als ca. 80 %) und für unpolarisiertes Licht teil-transmittierend (Transmissionsgrad ca. 50 %) ausgebildet ist. Der primäre Laserstrahl 81 trifft auf den Polarisationsstrahlteiler 72, an dem der größtmögliche Teil reflektiert wird und als divergenter sekundärer Laserstrahl **83** entlang einer optischen Achse **84** umgelenkt wird. Die Strahlformungsoptik 23 bündelt den sekundären Laserstrahl 83 als tertiären Laserstrahl 42 mit geringer Divergenz entlang der optischen Achse 43 auf das Zielobjekt 4.

Der vom Zielobjekt 4 reflektierte und/oder gestreute primäre Empfangsstrahl 44 trifft auf die Strahlformungsoptik 23, die den Empfangsstrahl 44 fokussiert und als sekundären Empfangsstrahl 45 entlang der optischen Achse 41 auf die Strahlteilungsoptik 72 richtet. Der sekundäre Empfangsstrahl 45 tritt durch die Strahlteilungsoptik 72 hindurch und wird als tertiärer Empfangsstrahl **85** entlang einer optischen Achse **86** auf den Detektor 22 gerichtet. Die Strahlteilungsoptik 72 sorgt dafür, dass die optische Achse 86 des tertiären Empfangsstrahls 85 und die optische Achse 82 des primären Laserstrahls 81 voneinander verschieden sind. Die Strahlformungsoptik 23 und der Detektor 22 sind in ihren Aufnahmen 31, 77 zumindest während der Justierung der Messeinrichtung 70 jeweils in einer Verstellrichtung 49, **87** die jeweils parallel zur zugehörigen optischen Achse 43, 86 verläuft, verstellbar ausgebildet; eine Verstellbarkeit in Richtung einer Ebene senkrecht zur jeweiligen optischen Achse 43, 86 ist nicht vorgesehen.

Die Justierung der Messeinrichtung 70 erfolgt mit Hilfe des in Fig. 2 beschriebenen optischen Instrumentes. Zunächst werden die optischen Komponenten 22, 23 des Optikträgers 71 in ihren jeweiligen Verstellrichtungen 87, 49 justiert. Die Strahlteilungsoptik 72 wird in die dritte Aufnahme 32 eingesetzt und mit dem Optikträger 71 verbunden. Der Detektor 22 und die Strahlformungsoptik 23 werden in die erste und zweite Aufnahme 77, 31 des Optikträgers 71 eingesetzt. Die Leiterplatte 73 wird auf Anschlag mit der ersten Kontaktfläche 75 temporär mit dem Optikträger 71 verbunden. Die Strahlquelle 21 wird aktiviert. Die Messeinrichtung 70 wird so vor dem optischen Instrument platziert, dass sowohl der tertiäre Laserstrahl 85 als auch das Bild der aktiven Fläche des Detektors 22 vom Kamerachip erfasst wird.

Die Strahlformungsoptik 23 wird in der zugeordneten Richtung 49 verschoben, bis das optische Instrument einen minimalen Fokuspunkt des tertiären Laserstrahls 85 detektiert. Anschließend wird der Detektor 22 in der zugeordneten Richtung 88 verschoben, bis das optische Instrument durch die Strahlformungsoptik 23 ein scharfes Bild der Detektorfläche detektiert. Die justierten Positionen der Strahlformungsoptik 23 und des Detektors 22 werden beispielsweise mittels Klebeverbindungen zum Optikträger 71 dauerhaft fixiert.

Nach der Justierung des Optikträgers 71 wird die Strahlquelle 21 justiert. Die Justierung der Strahlquelle 21 erfolgt über eine Verstellung der Leiterplatte 73 zum Optikträger 71. Dazu wird die Verbindungseinrichtung 74 zwischen dem Optikträger 71 und der Leiterplatte 73 gelöst. Die Strahlquelle 21 wird eingeschaltet und sendet einen Laserstrahl aus, der zusammen mit einem Bild der aktiven Fläche des Detektors 22 vom optischen Instrument erfasst wird. Der Laserstrahl bildet auf dem Kamerachip des optischen Instruments einen Fokuspunkt und die aktive Fläche bildet ein scharfes Bild, das dem Fokuspunkt überlagert ist. Die Leiterplatte 73 wird in der Ebene, die senkrecht zur optischen Achse 82 des primären Laserstrahls 81 ausgerichtet ist, auf Anschlag mit dem Optikträger 71 verschoben, bis der Fokuspunkt des Laserstrahls sich in einem bestimmten Bereich der aktiven Fläche des Detektors 22 befindet. Die Leiterplatte 73 wird in der justierten Position dauerhaft mit dem Optikträger 71 verbunden.

**Fig. 5** zeigt schematisch eine erste Ausführungsform einer Messeinrichtung **90** mit einem paraaxialen Aufbau. Bei einer paraaxialen Messeinrichtung verlaufen der Laserstrahl und der Empfangsstrahl parallel zueinander, so dass eine Strahlteilungsoptik entfällt. Allerdings sind bei einer paraaxialen Messeinrichtung zwei Strahlformungsoptiken erforderlich, eine als Sendeoptik ausgebildete erste Strahlformungsoptik zur Strahlformung des Laserstrahls und eine als Empfangsoptik ausgebildete zweite Strahlformungsoptik zur Strahlformung des Empfangsstrahls.

Die Messeinrichtung 90 umfasst einen monolithischen Optikträger **91,** in dem die Strahlquelle 21, eine Sendeoptik **92** und eine Empfangsoptik **93** angeordnet sind, und eine Leiterplatte **94,** auf der der Detektor 22 angeordnet ist und die über eine Verbindungseinrichtung **95** mit dem Optikträger 91 verbunden ist. Die Verbindungseinrichtung 95 verbindet eine erste Kontaktfläche **96** des Optikträgers 91 mit einer entsprechend ausgebildeten zweiten Kontaktfläche **97** der Leiterplatte 94.

Der monolithische Optikträger 91 weist eine erste Aufnahme **98** für die Strahlquelle 21, eine zweite Aufnahme **99** für die Sendeoptik 92 und eine dritte Aufnahme **101** für die Empfangsoptik 93 auf. Die Strahlquelle 21 sendet einen Laserstrahl **102** entlang einer optischen Achse **103** aus, die Sendeoptik 92 bündelt den Laserstrahl als Laserstrahl **104** entlang einer optischen Achse **105** auf das Zielobjekt 4 und die Empfangsoptik 93 bündelt einen Empfangsstrahl **106** entlang einer optischen Achse **107** auf den Detektor 22. Die Sendeoptik 92 und die Empfangsoptik 93 sind zumindest während der Justierung der Messeinrichtung 90 jeweils in einer Verstellrichtung **108, 109,** die parallel zur optischen Achse 103, 105 des Laserstrahls 102, 104 bzw. parallel zur optischen Achse 107 des Empfangsstrahls 106 verläuft, verstellbar. Alternativ zur Verstellbarkeit der Sendeoptik 92 in der Verstellrichtung 108 können die Strahlquelle 21 oder die Sendeoptik 92 und die Strahlquelle 21 in der Verstellrichtung 108 verstellbar ausgebildet sein.

Der Detektor 22 ist auf einer dem Optikträger 91 zugewandten Vorderseite **111** der Leiterplatte 94 angeordnet und während der Justierung der Messeinrichtung 90 in einer Aufnahme **112** fest mit der Leiterplatte 94 verbunden. Die Leiterplatte 94 ist über die Verbindungseinrichtung 95 zumindest während der Justierung der Messeinrichtung 90 lösbar mit dem Optikträger 91 verbunden.

Die Justierung der Messeinrichtung 90 erfolgt mit Hilfe des in Fig. 2 beschriebenen optischen Instrumentes. Die Strahlquelle 21 wird in die erste Aufnahme 99 auf Anschlag eingesetzt und mit dem Optikträger 91 verbunden. Die Sendeoptik 92 und die Empfangsoptik 93 werden in die zweite und dritte Aufnahme 99, 101 des Optikträgers 91 eingesetzt. Die Leiterplatte 94 wird temporär mit dem Optikträger 91 verbunden und die Strahlquelle 21 wird aktiviert. Die Sendeoptik 92 wird in ihrer Verstellrichtung 108 verschoben, bis das optische Instrument einen minimalen Fokuspunkt detektiert. Anschließend wird die Empfangsoptik 93 in ihrer Verstellrichtung 109 verschoben, bis das optische Instrument ein scharfes Bild der Detektorfläche detektiert. Die temporäre Verbindung zwischen dem Optikträger 91 und der Leiterplatte 94 wird gelöst. Die Leiterplatte 94 wird in der Ebene, die senkrecht zur optischen Achse 107 des Empfangsstrahls 106 verläuft, solange verschoben, bis sich der Fokuspunkt des Empfangsstrahls in einem bestimmten Bereich der aktiven Fläche des Detektors 22 befindet. Während der Justierung der Leiterplatte 94 dient die erste Kontaktfläche 96 des Optikträgers 91 als Anschlagfläche für die Leiterplatte 94.

## Patentansprüche

1. Messeinrichtung (20; 50; 70; 90) zur Messung einer Distanz zwischen einer Referenzmarke (9, 10) und einem Zielobjekt (4) bestehend aus
einer Strahlquelle (21), die als elektro-optische Komponente ausgebildet ist und einen Laserstrahl (37; 81; 102) entlang einer optischen Achse (38; 82; 103) aussendet,
einem Detektor (22), der als weitere elektro-optische Komponente ausgebildet ist und einen vom Zielobjekt (4) reflektierten und/oder gestreuten Empfangsstrahl (46; 85; 106) entlang einer optischen Achse (47; 86; 107) empfängt,
einem Strahlformungssystem, das mindestens eine Strahlformungsoptik (23; 92, 93) zur Strahlformung eines Laserstrahls (42; 104) und/oder eines Empfangsstrahls (45; 106) entlang einer optischen Achse (43, 41; 105, 107) aufweist,
einem monolithisch ausgebildeten Optikträger (25; 51; 71; 91), der eine erste Aufnahme (29; 77; 98) zur Befestigung einer ersten der elektro-optischen Komponenten (21; 22) und eine zweite Aufnahme (31; 99, 101) zur Befestigung der mindestens einen Strahlformungsoptik (23; 92, 93) aufweist,
einer Leiterplatte (26; 53; 73; 94), die eine weitere Aufnahme (33; 61; 79; 112) zur Befestigung einer zweiten der elektro-optischen Komponenten (22; 21) aufweist, wobei die auf der Leiterplatte (26; 53; 73; 94) angeordnete zweite der elektro-optischen Komponenten (22; 21) in einer Ebene im Wesentlichen senkrecht zur optischen Achse (47; 82; 107) des Laser- oder Empfangsstrahls (46; 81; 106), der der zweiten der elektro-optischen Komponenten (22; 21) zugeordnet ist, einstellbar und in der justierten Position fixierbar ist, und
einer Verbindungseinrichtung (27; 54; 74; 95), die eine erste Kontaktfläche (35; 55; 75; 96) des Optikträgers (25; 51; 71; 91) mit einer zweiten Kontaktfläche (36; 56; 76; 97) der Leiterplatte (26; 53; 73; 94) verbindet,
**dadurch gekennzeichnet, dass** während der Justierung der Messeinrichtung (20; 50; 70; 90) die im Optikträger (25; 51; 71; 91) angeordnete erste der elektro-optischen Komponenten (21; 22) und die mindestens eine Strahlformungsoptik (23; 92, 93) ausschließlich in Richtung der zugeordneten optischen Achsen (38, 41, 43; 84, 87; 103, 105, 107) relativ zum Optikträger (25; 51; 71; 91) eingestellt wird.

2. Messeinrichtung nach Anspruch 1, **dadurch gekennzeichnet, dass** die Leiterplatte (26; 73; 94) während der Justierung der Messeinrichtung (20; 70; 90) in der Ebene im Wesentlichen senkrecht zur zugeordneten optischen Achse (47; 82; 106) der zweiten der elektro-optischen Komponenten (22; 21) relativ zum Optikträger (25; 71; 91) verstellt wird und die erste Kontaktfläche (35; 75; 96) des Optikträgers (25; 71; 91) für die Leiterplatte (26; 73; 94) als Anschlagfläche in Richtung der zugeordneten optischen Achse (47; 82; 107) der zweiten der elektro-optischen Komponenten (22; 21) wirkt.

3. Messeinrichtung nach Anspruch 2, **dadurch gekennzeichnet, dass** die zweite der elektro-optischen Komponenten (22; 21) auf einer dem Optikträger (25; 71; 91) zugewandten Vorderseite (34; 78; 111) der Leiterplatte (26; 73; 94) angeordnet ist.

4. Messeinrichtung nach Anspruch 1, **dadurch gekennzeichnet, dass** die zweite der elektrooptischen Komponente (22) während der Justierung der Messeinrichtung (50) relativ zur Leiterplatte (53) in der Ebene im Wesentlichen senkrecht zur zugeordneten optischen Achse (47) der zweiten der elektro-optischen Komponenten (22) verstellt wird und die Leiterplatte (53) für die zweite der elektro-optischen Komponenten (22) als Anschlagfläche in Richtung der zugeordneten optischen Achse (47) der zweiten der elektrooptischen Komponenten (22) wirkt.

5. Messeinrichtung nach einem der Ansprüche 1, 2 oder 4, **dadurch gekennzeichnet, dass** die zweite der elektro-optischen Komponenten (22) auf einer dem Optikträger (51) abgewandten Rückseite (57) der Leiterplatte (53) angeordnet ist.

6. Messeinrichtung nach einem der Ansprüche 1 bis 5, **dadurch gekennzeichnet, dass** der Optikträger (25; 51; 71; 91) aus einem metallischen Material ausgebildet ist.

7. Messeinrichtung nach einem der Ansprüche 1 bis 6, **dadurch gekennzeichnet, dass** die Verbindungseinrichtung, die die erste Kontaktfläche (35; 75; 96) des Optikträgers (25; 71; 91) mit der zweiten Kontaktfläche (36; 76; 97) der Leiterplatte (26; 73; 94) verbindet, als Schraubverbindung (27; 74; 95) ausgebildet ist.

8. Messeinrichtung nach einem der Ansprüche 1 bis 6, **dadurch gekennzeichnet, dass** die Verbindungseinrichtung, die die erste Kontaktfläche (35; 75; 96) des Optikträgers (25; 71; 91) mit der zweiten Kontaktfläche (36; 76; 97) der Leiterplatte (26; 73; 94) verbindet, als Kleb- und Schraubverbindung (27; 74; 95) ausgebildet ist.

## Claims

1. Measuring device (20; 50; 70; 90) for measuring a distance between a reference mark (9, 10) and a target object (4), comprising
a beam source (21) which is configured as an electro-optical component and emits a laser beam (37; 81; 102) along an optical axis (38; 82; 103),
a detector (22) which is configured as a further electro-optical component and receives a reception beam (46; 85; 106), reflected and/or scattered by the target object (4), along an optical axis (47; 86; 107),
a beam-shaping system having at least one beam-shaping optical element (23; 92, 93) for shaping a laser beam (42; 104) and/or a reception beam (45; 106) along an optical axis (43, 41; 105, 107),
a monolithically configured optics carrier (25; 51; 71; 91) having a first receptacle (29; 77; 98) for fastening a first of the electro-optical components (21; 22) and a second receptacle (31; 99, 101) for fastening the at least one beam-shaping optical element (23; 92, 93),
a printed circuit board (26; 53; 73; 94) having a further receptacle (33; 61; 79; 112) for fastening a second of the electro-optical components (22; 21), wherein the second of the electro-optical components (22; 21), arranged on the printed circuit board (26; 53; 73; 94), is adjustable in a plane substantially perpendicular to the optical axis (47; 82; 107) of the laser beam or reception beam (46; 81; 106) associated with the second of the electro-optical components (22; 21) and can be fixed in the adjusted position, and
a connecting device (27; 54; 74; 95) which connects a first contact face (35; 55; 75; 96) of the optics carrier (25; 51; 71; 91) to a second contact face (36; 56; 76; 97) of the printed circuit board (26; 53; 73; 94),
**characterised in that,** during the adjustment of the measuring device (20; 50; 70; 90), the first of the electro-optical components (21; 22), arranged in the optics carrier (25; 51; 71; 91), and the at least one beam-shaping optical element (23; 92, 93) are adjusted relative to the optics carrier (25; 51; 71; 91) exclusively in the direction of the associated optical axes (38, 41, 43; 84, 87; 103, 105, 107).

2. Measuring device according to Claim 1, **characterised in that,** during the adjustment of the measuring device (20; 70; 90), the printed circuit board (26; 73; 94) is adjusted relative to the optics carrier (25; 71; 91) in the plane substantially perpendicular to the associated optical axis (47; 82; 106) of the second of the electro-optical components (22; 21), and the first contact face (35; 75; 96) of the optics carrier (25; 71; 91) acts for the printed circuit board (26; 73; 94) as an abutment face in the direction of the associated optical axis (47; 82; 107) of the second of the electro-optical components (22; 21).

3. Measuring device according to Claim 2, **characterised in that** the second of the electro-optical components (22; 21) is arranged on a front side (34; 78; 111) of the printed circuit board (26; 73; 94) facing towards the optics carrier (25; 71; 91).

4. Measuring device according to Claim 1, **characterised in that,** during the adjustment of the measuring device (50), the second of the electro-optical components (22) is adjusted relative to the printed circuit board (53) in the plane substantially perpendicular to the associated optical axis (47) of the second of the electro-optical components (22), and the printed circuit board (53) acts for the second of the electro-optical components (22) as an abutment face in the direction of the associated optical axis (47) of the second of the electro-optical components (22).

5. Measuring device according to any one of Claims 1, 2 and 4, **characterised in that** the second of the electro-optical components (22) is arranged on a rear side (57) of the printed circuit board (53) facing away from the optics carrier (51).

6. Measuring device according to any one of Claims 1 to 5, **characterised in that** the optics carrier (25; 51; 71; 91) is formed from a metallic material.

7. Measuring device according to any one of Claims 1 to 6, **characterised in that** the connecting device which connects the first contact face (35; 75; 96) of the optics carrier (25; 71; 91) to the second contact face (36; 76; 97) of the printed circuit board (26; 73; 94) is in the form of a screw connection (27; 74; 95).

8. Measuring device according to any one of Claims 1 to 6, **characterised in that** the connecting device which connects the first contact face (35; 75; 96) of the optics carrier (25; 71; 91) to the second contact face (36; 76; 97) of the printed circuit board (26; 73; 94) is in the form of a bonded and screw connection (27; 74; 95).

## Revendications

1. Dispositif de mesure (20 ; 50 ; 70 ; 90) destiné à mesurer une distance entre une marque de référence (9, 10) et un objet cible (4), constitué de :
une source de faisceau (21) qui est mise en oeuvre sous la forme d'un composant électro-optique et qui émet un faisceau laser (37 ; 81 ; 102) le long d'un axe optique (38 ; 82 ; 103),
un détecteur (22) qui est mis en oeuvre sous la forme d'un composant électro-optique supplémentaire et qui reçoit un faisceau de réception (46 ; 85 ; 106) réfléchi et/ou dispersé par l'objet cible (4) le long d'un axe optique (47 ; 86 ; 107),
un système de conformation de faisceau qui comporte au moins un élément optique de conformation de faisceau (23 ; 92, 93) pour la conformation d'un faisceau laser (42 ; 104) et/ou d'un faisceau de réception (45 ; 106) le long d'un axe optique (43, 41 ; 105, 107),
un support d'élément optique formé de manière monolithique (25 ; 51 ; 71 ; 91) qui comporte un premier logement (29 ; 77 ; 98) pour la fixation d'un premier des composants électro-optiques (21 ; 22) et un second logement (31 ; 99, 101) pour la fixation dudit au moins un élément optique de conformation de faisceau (23 ; 92, 93),
une carte à circuit imprimé (26 ; 53 ; 73 ; 94) qui comporte un logement supplémentaire (33 ; 61 ; 79 ; 112) pour la fixation d'un second des composants électro-optiques (22 ; 21), dans lequel le second des composants électro-optiques (22 ; 21) agencé sur la carte à circuit imprimé (26 ; 53 ; 73 ; 94) est réglable dans un plan sensiblement perpendiculaire à l'axe optique (47 ; 82 ; 107) du faisceau laser ou de réception (46 ; 81 ; 106) qui est couplé au second des composants électro-optiques (22 ; 21) et peut être fixé dans la position réglée, et
un dispositif d'assemblage (27 ; 54 ; 74 ; 95) qui assemble une première surface de contact (35 ; 55 ; 75 ; 96) du support d'élément optique (25 ; 51 ; 71 ; 91) à une seconde surface de contact (36 ; 56 ; 76 ; 97) de la carte à circuit imprimé (26 ; 53 ; 73 ; 94),
**caractérisé en ce que** pendant le réglage du dispositif de mesure (20 ; 50 ; 70 ; 90), le premier des composants électro-optiques (21 ; 22) agencé dans le support d'élément optique (25 ; 51 ; 71 ; 91) et ledit au moins un élément optique de conformation de faisceau (23 ; 92, 93) sont uniquement réglés par rapport au support d'élément optique (25 ; 51 ; 71 ; 91) en direction des axes optiques associés (38, 41, 43 ; 84, 87 ; 103, 105, 107).

2. Dispositif de mesure selon la revendication 1, **caractérisé en ce que** la carte à circuit imprimé (26 ; 73 ; 94) est réglée pendant le réglage du dispositif de mesure (20 ; 70 ; 90) par rapport au support d'élément optique (25 ; 71 ; 91), dans le plan sensiblement perpendiculaire à l'axe optique associé (47 ; 82 ; 106) du second des composants électro-optiques (22 ; 21), et la première surface de contact (35 ; 75 ; 96) du support d'élément optique (25 ; 71 ; 91) agit pour la carte à circuit imprimé (26 ; 73 ; 94) comme une surface de butée en direction de l'axe optique associé (47 ; 82 ; 107) du second des composants électro-optiques (22 ; 21).

3. Dispositif de mesure selon la revendication 2, **caractérisé en ce que** le second des composants électro-optiques (22 ; 21) est agencé sur un côté avant (34 ; 78 ; 111) de la carte à circuit imprimé (26 ; 73 ; 94) dirigé vers le support d'élément optique (25 ; 71 ; 91).

4. Dispositif de mesure selon la revendication 1, **caractérisé en ce que** le second des composants électro-optiques (22) est réglé pendant le réglage du dispositif de mesure (50) par rapport à la carte à circuit imprimé (53) dans le plan sensiblement perpendiculaire à l'axe optique associé (47) du second des composants électro-optiques (22), et la carte à circuit imprimé (53) agit pour le second des composants électro-optiques (22) comme une surface de butée en direction de l'axe optique associé (47) du second des composants électro-optiques (22).

5. Dispositif de mesure selon l'une des revendications 1, 2 ou 4, **caractérisé en ce que** le second des composants électro-optiques (22) est agencé sur un côté arrière (57) de la carte à circuit imprimé (53) opposé au support d'élément optique (51).

6. Dispositif de mesure selon l'une des revendications 1 à 5, **caractérisé en ce que** le support d'élément optique (25 ; 51 ; 71 ; 91) est formé à partir d'un matériau métallique.

7. Dispositif de mesure selon l'une des revendications 1 à 6, **caractérisé en ce que** le dispositif d'assemblage qui assemble la première surface de contact (35 ; 75 ; 96) du support d'élément optique (25 ; 71 ; 91) à la seconde surface de contact (36 ; 76 ; 97) de la carte à circuit imprimé (26 ; 73 ; 94) est mis en oeuvre sous la forme d'un assemblage vissé (27 ; 74 ; 95).

8. Dispositif de mesure selon l'une des revendications 1 à 6, **caractérisé en ce que** le dispositif d'assemblage qui assemble la première surface de contact (35 ; 75 ; 96) du support d'élément optique (25 ; 71 ; 91) à la seconde surface de contact (36 ; 76 ; 97) de la carte à circuit imprimé (26 ; 73 ; 94) est mise en oeuvre sous la forme d'un assemblage collé et vissé (27 ; 74 ; 95).
